(19)

Europäisches
Patentamt

European
Patent Office

Office européen
des brevets

(11)  **EP 2 770 387 A1**

(12)  **EUROPEAN PATENT APPLICATION**

(43) Date of publication:
    **27.08.2014  Bulletin 2014/35**

(51) Int Cl.:
    ***G05B 19/4065*** *(2006.01)*

(21) Application number: **13156160.7**

(22) Date of filing: **21.02.2013**

(84) Designated Contracting States:
    **AL AT BE BG CH CY CZ DE DK EE ES FI FR GB
    GR HR HU IE IS IT LI LT LU LV MC MK MT NL NO
    PL PT RO RS SE SI SK SM TR**
    Designated Extension States:
    **BA ME**

(71) Applicant: **ABB Technology AG
    8050 Zürich (CH)**

(72) Inventors:
    • **Gallestey Alvarez, Eduardo
      5507 Mellingen (CH)**
    • **Gaulocher, Sebastian
      4800 Zofingen (CH)**

(74) Representative: **ABB Patent Attorneys
    C/o ABB Schweiz AG
    Intellectual Property (CH-LI/IP)
    Brown Boveri Strasse 6
    5400 Baden (CH)**

(54)    **Optimal operation of a gearless mill**

(57)    The present invention is concerned with the field of process control, in particular a method for optimal operation of a mill. An operation of a gearless mill is optimized with a mill component being subject to degradation. Initially, a nominal lifetime trajectory $LTn(\tau)$ for the component indicative of a nominal component lifetime may be provided at a future point in time $\tau$. In the beginning a trajectory of input values $u(\tau)$ of local controllers for flows and levels is determined. Subsequently, by simulating the mill behaviour from the trajectory of input values $u(\tau)$ a corresponding lifetime trajectory $LTp(\tau)$ of the component is determined. In a next step an objective function $J[u]$ is computed comprising a difference between the simulated lifetime trajectory $LTp(\tau)$ and the nominal lifetime trajectory $LTn(\tau)$ or an integral of said difference. Subsequently, the steps of determining a trajectory of input values, determining a corresponding lifetime trajectory, and computing an objective function are repeated with an optimisation module 1 varying the trajectory of input values $u(\tau)$ until an optimised value of the objective function $J[u]$ is arrived at. Finally, a first or earliest input value $u^*(\tau_1)$ of the trajectory of input values that optimizes the objective function $J[u]$ is applied to the mill.

Fig. 2

EP 2 770 387 A1

**Description**

FIELD OF THE INVENTION

The invention relates to the field of process control, in particular to a method for optimal operation of a mill.

BACKGROUND OF THE INVENTION

Grinding and grinding processes are critical to industrial production of e.g. cement and minerals. Typically grinding mills are used to reduce the size of large pieces of mined materials. The overall surface of mined material is increased in order to enable or increase efficiency of chemical reactions or mechanical separation processes of subsequent production steps.

For this purpose there are in principle two types of grinding mills, geared mills and gearless mills. Gearless mills are also known as ring motor mills as they are typically driven by a direct drive ring motor mounted around an outer shell of the mill body. Gearless mills do not involve components such as gears or pinions and as there are no mechanical parts relied upon to transmit the driving torque, the mechanical losses occurring, for example in the gearbox, are eliminated compared to geared mills.

An exemplary embodiment of such a prior art ring motor mill is comprised of a mill body where rotor poles of the ring motor are directly attached to a flange on an outer shell of the mill body. A stator of the ring motor is mounted around the rotor poles leaving an air gap between the rotor and the stator. Driving torque is transmitted e.g. via a magnetic field directly from the motor to the mill body.

The mill itself and its components are exposed to extreme conditions causing ageing and fatigue of the material and eventually failure of certain components. In particular, the mill is experiencing mechanical and thermal ageing. The mechanical ageing of the mill and its components is in principal equivalent to metal fatigue. Vibrations during the milling process lead to temporary air gaps and subsequent friction between components. Friction in the mill may cause high temperatures at times and thus leads to thermal ageing of the component material.

Therefore, mills are specifically designed to endure and withstand harsh conditions, in particular high load, current, temperature, stress and the alike. However, the mill and its components may only withstand these conditions for a certain period of time such as specific hours of operation. This period defines the lifetime of such a mill and its components. The lifetime depends further on a mode of operation, e.g. maximal efficiency or maximal output. Operational parameters such as throughput or load may be optimized according to the mode of operation and further parameters such as grindability, drawn power limits, efficiency loss due to air gaps, etc. This leads to degradation of the mill with a varying lifetime. Thus, maintenance needs to be performed routinely and costly repairs may be done only after substantial damage already occurred or may be performed to early where components may actually have a longer lifetime.

The problem of a varying lifetime depending on operational parameters and working conditions is addressed by lifetime monitoring systems computing equivalent operating hours. These equivalent operating hours are used to estimate maintenance or a major overhaul. However, equivalent hours as a parameter is not accurate enough to optimize operational parameters and can only give a rough estimate of the occurred degradation and damage.

DESCRIPTION OF THE INVENTION

It is therefore an objective of the invention to optimize operation of a gearless mill by predicting degradation and damage to a mill and its components. This objective is achieved by a method for optimal operation of a gearless mill according to claim 1. Preferred embodiments are evident from the dependent patent claims, wherein the claim dependency shall not be construed as excluding further meaningful claim combinations.

According to the invention, an operation of a gearless mill, e.g. an Autogenous or Semi Autogenous Grinding SAG mill, is optimized with a mill component such as a critical component being subject to degradation. Initially, a nominal lifetime trajectory $LTn(\tau)$ for the component indicative of a nominal or target remaining or consumed component lifetime may be provided at a future point in time $\tau$, i.e. at a succession of future time steps $\tau_1$, $\tau_2$, $\tau_3$ etc. In the beginning a trajectory of input values $u(\tau)$ also known as control values, input parameters, and set-points of local controllers for flows and levels is determined. Subsequently, by simulating the mill behaviour from the trajectory of input values $u(\tau)$ a corresponding lifetime trajectory $LTp(\tau)$ of the component is determined. In a next step an objective function $J[u]$ is computed comprising a difference between the simulated lifetime trajectory $LTp(\tau)$ and the nominal lifetime trajectory $LTn(\tau)$ or an integral of said difference. Subsequently, the steps a) through c), i.e. the steps of determining a trajectory of input values, determining a corresponding lifetime trajectory, and computing an objective function are repeated with an optimisation module varying the trajectory of input values $u(\tau)$ until an optimised value of the objective function $J[u]$ is arrived at. Finally, a first or earliest input value $u^*(\tau_1)$ of the trajectory of input values that optimizes the objective function $J[u]$ is applied to the mill.

In a preferred variant of the invention, the method comprises further providing or computing a trajectory of optimal or target process variables including load, torques, and flows of the mill. Subsequently, a corresponding trajectory of the process variables $P(\tau)$ is determined by simulation of the mill behaviour from the trajectory of input values $u(\tau)$. In a following step an objective function $J[u]$ comprising a difference between the simulated trajectory of the process variables $P(\tau)$ and the trajectory of optimal process variables $Pn(\tau)$ is computed.

In an advantageous embodiment of the invention, the method comprises providing a nominal lifetime trajectory $LTn(\tau)$ for the component, indicative of a consumed lifetime at a predetermined component maintenance time $\tau'$.

In a further embodiment of the invention, the step b), i.e. determining a corresponding lifetime trajectory $LTp(\tau)$ of the component, comprises determining the lifetime trajectory $LTp(\tau)$ of the mill component including one of crack growth or creep models of thick-walled mill components such as a stator winding insulation of a stator of a mill drive related to mechanical stress, fatigue estimation in key bars, stator frame, pinion, couplings related to start ups and shut downs, power electronics, i.e. semiconductor failure estimation, e.g. of power semiconductor switching elements such as thyristors, related to high load such as speed, torque, power operation and/or large number of switching events, wear estimation, e.g. of coal brushes, slip ring, motor bearings, gearbox, related to number of rotations of the mill drive.

The present invention also relates to a computer program product including computer program code for controlling one or more processors of a device adapted to be connected to a mill and/or configured to store a standardized configuration representation, particularly, a computer program product including a computer readable medium containing therein the computer program code.

BRIEF DESCRIPTION OF THE DRAWINGS

The subject matter of the invention will be explained in more detail in the following text with reference to preferred exemplary embodiments which are illustrated in the attached drawings, in which:

    Fig. 1 shows a block diagram corresponding to the invention; and;
    Fig.2 shows a block diagram corresponding to a preferred embodiment of the invention

The reference symbols used in the drawings, and their meanings, are listed in summary form in the list of designations. In principle, identical parts are provided with the same reference symbols in the figures.

DETAILED DESCRIPTION OF PREFERRED EMBODIMENTS

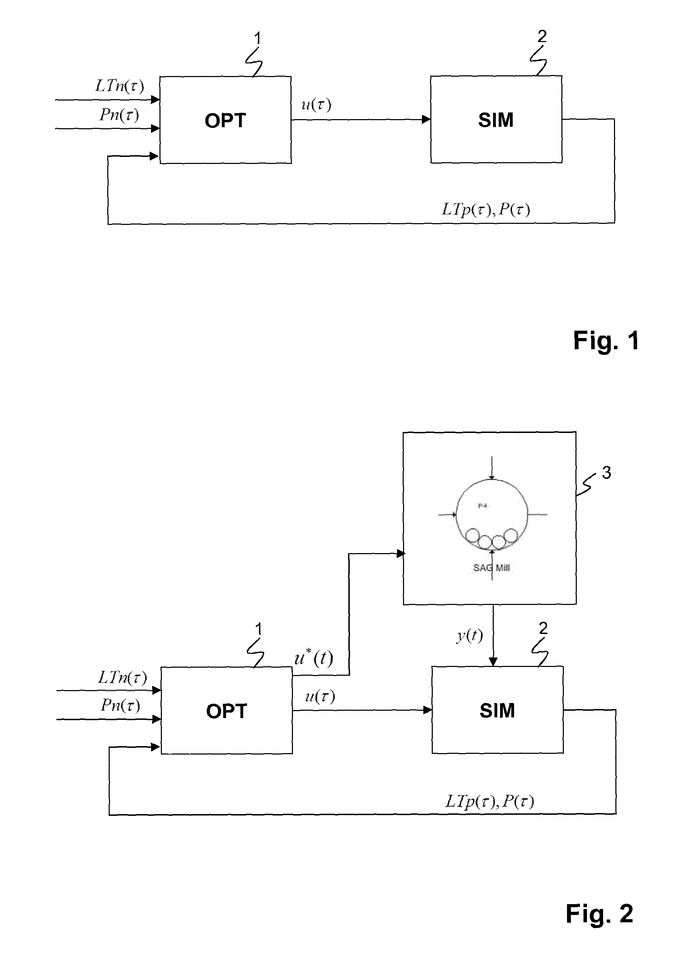

Figure 1 shows a block diagram corresponding to the invention. The invention uses optimization techniques such as nonlinear model predictive control (MPC), and improved knowledge of a component aging process, to choose the best operating condition, e.g. online in dependence of the component state and of lifetime goals where the lifetime of the mill components is monitored, i.e. measured or estimated.

An optimisation module 1 is provided with a nominal lifetime trajectory $LTn(\tau)$ and with optimal or target process variables $Pn(\tau)$. The optimisation module 1 generates mill operating input or input values $u(\tau)$ as input to a simulation module 2. The simulation module 2 comprises a simulation model of an actual mill 3 and determines values for a mills internal states or process variables $P(\tau)$, and values of a lifetime trajectory $LTp(\tau)$ of mill components. The values determined by the simulation module 2 are input to the optimisation module 1.

The values $LTn(\tau)$, $LTp(\tau)$, $Pn(\tau)$, $P(\tau)$, $u(\tau)$ mentioned above are, in general, vectors that change over time, i.e. each vector represents a trajectory in a multidimensional space. For example, $LTp(\tau)$ represents a lifetime trajectory for a plurality of components over the next hours, days or months. $P(\tau)$ represents e.g. stress, pressure and temperature and their gradients, or metal temperatures of critical components.

The input values $u(\tau)$ represent mill input or operation parameters that are used to control the mill. From a trajectory of input values $u(\tau)$ that is given for a time interval from a present time $t$ to a future time $t + T$, where $T$ is called "prediction horizon" or "optimisation horizon", the simulation model determines a trajectory of the state of the mill, i.e. the values of a plurality of variables that represent the state of the mill as it changes with time. From the state trajectory, trajectories $LTp(\tau)$, $P(\tau)$ for the values output by the simulation module 2 are determined for said time interval. In a preferred embodiment of the invention, the simulation model is a dynamic model of the mill and its components.

The nominal process variables $Pn(\tau)$ are determined from process knowledge, taking into account a computer model of process physics and preferably optimising process efficiency and/or another optimisation criterion such as reliability. They are either predetermined or computed online during mill operation.

The lifetime trajectory $LTp(\tau)$ of mill components represents a remaining lifetime for a plurality of mill components. A lifetime value for a component may, depending on convention, either represent a "remaining lifetime" or a "consumed lifetime". The latter are sometimes denoted as "equivalent operating hours" (EOH). Whichever convention is adopted does not affect the invention: A remaining lifetime decreases steadily from a total lifetime down to or beyond zero, while a consumed lifetime increases steadily up to and beyond the total lifetime. The total lifetime is the time span that the component is designed to be in operation under given nominal condition. Lifetime boundary values determine when servicing or replacement of a component should take place - at the latest, when remaining lifetime is zero or less. After such servicing or replacement, the component's lifetime is reset accordingly.

Mill components are e.g. mill liners, lifters, stator winding insulation, stator holding plates, key bars, stator frame, pinions, couplings, coal brushes, slip rings, motor bearings, and gearboxes. They are designed to withstand normal operating conditions for a given amount of time, i.e. for their total lifetime under nominal conditions. Subjecting a component to more severe operating conditions such as higher temperatures or temperature gradients increases component degradation and reduces component lifetime. This in turn increases long term costs for operating the mill. Nevertheless it may be advantageous to determine nominal process values $Pn(\tau)$ that exceed normal operating limits and incur the corresponding operating losses if gains from production are sufficiently high. According to the invention, the corresponding change in lifetime is also taken into account and controlled by operating the mill accordingly.

The lifetime trajectory $LTp(\tau)$ is computed from models associated with various mill components, such as the following models, which are well known to one skilled in the art:

■ Model for the excessive wear of mill liners or similar mill components influenced by loading and speed of the mill as well as properties of the feed material. See for example "A new predictive model of lifter bar wear in mills", M. Rezaeizadeha, M. Fooladia, M.S. Powellb, S.H. Mansouria, N.S. WeerasekaraB, Minerals Engineering, Volume 23, Issue 15, December 2010, Pages 1174-1181.

■ Model for the development of cracks due to material fatigue, e.g. in stator holding plates and possibly other components such as key bars, stator frame, pinions, and couplings. Specifically, model for the development of cracks in the stator winding insulation influenced by the number of start and stop of temperature cycles, cold starts, voltage, and power. See for example "Estimating Lifetimes for Stator Windings in Hydropower Generators" A. Karlsson and T. Karlsson, 9th International Conference on Probabilistic Methods Applied to Power Systems KTH, Stockholm, Sweden - June 11-15, 2006.

■ Model for semiconductor failures such as thyristors influenced by the number of switching events, the values of current and voltage, and operation above nominal values, i.e. speed, torque, and power.

■ Mechanical stress models to determine stresses created in mill components, e.g. wear of coal brushes, slip rings, and gears.

A lifetime $LT_i(t)$ is associated with an ith component, for example, stator holding plates subject to constant and/or cyclic stresses. For such a plate, $LT_i(t)$ is, for example, computed from a crack growth model that determines an average current crack size $a_i(t)$. The lifetime is determined as

$$LT_i(t) = k(a_{crit} - a_i(t))$$

where is $a_{crit}$ a critical crack size and $k$ is a normalising coefficient. When $LT_i(t)$ reaches zero or becomes negative, the component is assumed to have reached or exceeded its lifetime. However, any other method for calculating component lifetime from operating conditions may be used.

In the inventive method, the following steps are performed where initially a nominal lifetime trajectory $LTn(\tau)$ for the component, indicative of a nominal or target remaining or consumed component lifetime at a future point in time $\tau$ is provided.

a) The optimisation module 1 determines the trajectory of mill input values $u(\tau)$ from the present time $t$ for a predetermined duration $T$ and transmits said mill input values $u(\tau)$ to the simulation module 2. The first time that this step is executed, mill input values are e.g. set to constant values for the duration $T$ or are determined from stored standard trajectories corresponding to a given operating condition such as a mill start-up or a load change. Later executions of this step preferably use a variation of the mill input values $u(\tau)$ of an earlier step.

b) The mill model incorporated in the simulation module 2 determines from the trajectory of input values $u(\tau)$, by simulation of the mill behaviour, a corresponding lifetime trajectory $LTp(\tau)$ of the component. From said lifetime trajectory $LTp(\tau)$, corresponding trajectories of process variables $P(\tau)$ are determined. Input values are, for example, valve positions, motor speeds, electric power flow, etc. Process variables $P(\tau)$ represent the physical process of main interest. Some process variables $P(\tau)$ are identical to states of the mill in the control sense, others are computed from the states by linear or non-linear and/or dynamic submodels. From the process variables $P(\tau)$, simulated values of lifetime trajectory $LTp(\tau)$ of mill components are computed.

c) An objective function $J[u]$ is computed as an integral of a difference between the simulated lifetime trajectory

$LTp(\tau)$ and the nominal lifetime trajectory $LTn(\tau)$. In a preferred embodiment of the invention, this objective function $J[u]$ is defined as the functional

$$J[u] = \int_t^{t+T} \left\| R_{LT}(\tau)\big(LTn(\tau) - LTp(\tau)\big) \right\| \, d\tau,$$

where $R_{LT}$ is a weighting matrix. It determines a relative influence of the magnitude of components $\Delta LT_i(t)$ of the difference between nominal and simulated actual lifetime vectors $LTn(\tau)$, $LTp(\tau)$. The norm $\|...\|$ used in the integral is any norm, for example a 2-norm or an infinity norm. In an embodiment of the invention, the above objective function also includes a deviation of the process variables $P(\tau)$ from the desired nominal process variables $Pn(\tau)$. In this embodiment, the objective function $J[u]$ is preferably defined as

$$J[u] = \int_t^{t+T} \left\| R_{LT}(\tau)\big(LTn(\tau) - LTp(\tau)\big) \right\| + \left\| R_P(\tau)\big(Pn(\tau) - P(\tau)\big) \right\| \, d\tau,$$

where $R_P$ is a corresponding weighting matrix for process variables. It allows prescription of the relative importance of deviations of individual variables with respect to one another and to lifetime values. Both $R_{LT}$ and $R_P$ are time dependent and positive semidefinite. If a 2-norm is used, the function is

$$J[u] = \int_t^{t+T} \left\| R_{LT}(\tau)\big(LTn(\tau) - LTp(\tau)\big) \right\|^2 + \left\| R_P(\tau)\big(Pn(\tau) - P(\tau)\big) \right\|^2 \, d\tau.$$

d) Steps a) through c) are repeated iteratively, with the optimisation module varying the trajectory of mill input values $u : [t, t+T] \mapsto R^n$ until an optimised lower value of the objective function $J[u]$ is arrived at. As the trajectories $LTp(\tau)$, $P(\tau)$ depend upon mill input values $u(\tau)$, the optimisation routine finds a trajectory of input values $u(\tau)$ or strategy $u^* : [t, t+T] \mapsto R^n$ that minimises the objective function $J[u]$. Appropriate optimisation and simulation methods are well known from the field of model predictive control (MPC).

In the case in which the objective function $J[u]$ is minimised the mill input values $u(\tau)$ are considered to be input values that are varied for the simulation and by optimisation. When the objective function $J[P]$ is minimised, then the process variables $P(\tau)$ are considered to be said input values.

In a further embodiment of the invention, the objective function incorporates a term that represents a difference between the lifetime vector $LTp(T_E)$ and the nominal lifetime vector $LTn(T_E)$ at a given predetermined end time $T_E$, weighted with an appropriate weighting matrix $R_E$. For example, the objective function $J[u]$ is

$$\int_t^{t+T} \left\| R_{LT}(\tau)\big(LTn(\tau) - LTp(\tau)\big) \right\| + \left\| R_P(\tau)\big(Pn(\tau) - P(\tau)\big) \right\| \, d\tau \quad + \left\| R_E\big(LTn(T_E) - LTp(T_E)\big) \right\|$$

This term realises a soft constraint that penalises not reaching the nominal lifetime vector $LTn(T_E)$ at time $T_E$.
In another embodiment of the invention, this penalty is achieved by the time dependency of $R_{LT}$, i.e. by having relatively large entries in $R_{LT}$ at the time $T_E$. If following the exact trajectory of the nominal lifetime vector $LTn(\tau)$ is not important most of the time, the entries in $R_{LT}$ are set to relatively small values for these times.
In yet a further embodiment of the invention, the optimisation is subject to hard constraints on one or more of the mill input values $u(\tau)$ and/or of the process variables $P(\tau)$.
In a further embodiment lifetime is treated as a consumable material where consumption is paid for as for power, water, or grinding balls. In this embodiment the optimization problem would include all terms leading to a complete optimisation of the mill operation. This way, combinations of hard and soft constraints would enhance the overall solution and guarantee the fulfilment of the overall goal.

In another embodiment of the invention, the nominal lifetime vector $LTn(\tau)$ is determined such that the nominal lifetime consumption of components is co-ordinated, with a plurality of given components reaching an associated predetermined lifetime limit value at the same time. For example, if maintenance of a given component involves shutting down other components simultaneously, then maintenance of these other components may take place when the given component is shut down. Accordingly, the nominal lifetime of these other components is scheduled to reach or at least allowed by choice of weighting values to reach an associated lifetime limit value at essentially the same time as the given component.

The optimisation step c) involves the problem of how to find the optimal solution efficiently, since the search space determined by the plurality of mill input values and the duration T is large. Standard optimisation procedures based on e.g. dynamic programming or the Hamilton-Jacobi method may be used. If the objective function incorporates a hard constraint on the lifetime at the end time, then a solution to the corresponding optimisation problem is found e.g. by the Pontryaguin maximum principle. Alternative optimisation routines based on brute force methods coupled with complexity reducing heuristics are also possible, for example, simulated annealing and genetic algorithms.

In a embodiment of the invention, at time $t$, the control strategy, i.e. one or more of the future values

$$u : [t, t + T] \mapsto R^n$$ corresponding to optimal mill operation and/or corresponding values of the optimal trajectory $P^*(\tau)$

of process variables are displayed graphically to an operator, providing guidance for controlling the mill. Figure 2 shows a block diagram corresponding to another embodiment of the invention, in which, at time t, an optimal input value $u^*(t)$ is applied to the actual mill 3, resulting in automatic optimised mill operation. Preferably, measured mill values $y(t)$ of the mill are input to the simulation module 2 in order to update the simulation model. Appropriate modelling and model update techniques are well known from the fields of optimal control and model predictive control. In particular, receding horizon control techniques give useful results. The mill is, for example, a ball mill, a rod mill, an autogenous mill, a Semi Autogenous Grinding SAG mill, a pebble mill or a tower mill.

A computer program product according to the invention comprises a computer readable medium, having thereon: computer program code means to make, when said program is loaded in a computer that is operationally connected to a mill, the computer executes the method according to the invention. A computer program according to the invention comprises said computer program code.

The invention allows the operator or an automatic controller to incorporate not only short-term financial considerations into a mill operating strategy, but also allows scheduling and consideration of the influence of lifetime consumption on components, in order to meet and/or optimise planned replacement and maintenance schedules. Production loss due to unplanned downtime is one of the largest controllable variable in the mine bottom line. The ability to have a systematic approach to trade off short term goals such as production rate at a given time, with long term goals such as reliability during a certain period of time is a great advantage.

<div align="center">LIST OF DESIGNATIONS</div>

| | |
|---|---|
| 1 | optimisation module |
| 2 | simulation module |
| 3 | actual mill |
| $u(\tau)$ | imput values |
| $u^*(t)$ | optimal input values |
| $LTp(\tau)$ | lifetime trajectory |
| $LTn(\tau)$ | desired or nominal lifetime trajectory |
| $P(\tau)$ | process variables |
| $Pn(\tau)$ | desired or nominal process variables |
| $y(t)$ | measured mill values |

**Claims**

1. A method for optimal operation of a gearless mill with a mill component subject to degradation, where the method comprises the steps of

o) providing a nominal lifetime trajectory $LTu(\tau)$ for the component, indicative of a nominal remaining component lifetime at a future point in time $\tau$,
a) determining a trajectory of input values $u(\tau)$,
b) determining, by simulation of the mill behaviour, from the trajectory of input values $u(\tau)$ a corresponding lifetime trajectory $LTp(\tau)$ of the component,

<div align="center">6</div>

c) computing an objective function $J[u]$ comprising a difference between the simulated lifetime trajectory $LTp(\tau)$ and the nominal lifetime trajectory $LTn(\tau)$,

d) iteratively repeating steps a) through c) with an optimisation module (1) varying the trajectory of input values $u(\tau)$ until an optimised value of the objective function $J[u]$ is arrived at,

e) applying to the mill a first input value $u^*(\tau_1)$ of the trajectory of input values that optimizes the objective function $J[u]$.

**2.** Method according to claim 1, comprising

o) providing a trajectory of optimal process variables $Pn(\tau)$ of the mill,

b) determining, by simulation of the mill behaviour, from the trajectory of input values $u(\tau)$ a corresponding trajectory of the process variables $P(\tau)$, and

c) computing an objective function $J[u]$ comprising a difference between the simulated trajectory of the process variables $P(\tau)$ and the trajectory of optimal process variables $Pn(\tau)$.

**3.** Method according to claim 1, comprising

o) providing a nominal lifetime trajectory $LTn(\tau)$ for the component, indicative of a consumed lifetime at a predetermined component maintenance time $\tau'$.

**4.** Method according to claim 1, wherein step b) comprises determining the lifetime trajectory $LTp(\tau)$ of the mill component including at least one of

- crack growth models related to mechanical stress,
- fatigue estimation related to start ups and shut downs,
- power electronics failure estimation related to high load,
- wear estimation related to number of rotations.

**Fig. 1**

**Fig. 2**

Europäisches
Patentamt

European
Patent Office

Office européen
des brevets

# EUROPEAN SEARCH REPORT

Application Number

EP 13 15 6160

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 301 296 B1 (DISCENZO FREDERICK M [US]) 27 November 2007 (2007-11-27) * column 1 - column 15; figures 1-7 * ----- | 1-4 | INV. G05B19/4065 |
| X | US 5 210 704 A (HUSSEINY ABDO A [US]) 11 May 1993 (1993-05-11) * column 1 - column 24; figures 1-22 * ----- | 1-4 | |
| X | US 5 533 413 A (KOBAYASHI YASUNORI [JP] ET AL) 9 July 1996 (1996-07-09) * columns 1-12; figures 1-15 * ----- | 1-4 | |
| A | US 2009/240366 A1 (KAUSHAL SANJEEV [US] ET AL) 24 September 2009 (2009-09-24) * paragraph [0005] - paragraph [0009] * ----- | 1-4 | |

TECHNICAL FIELDS
SEARCHED     (IPC)

G05B

The present search report has been drawn up for all claims

| Place of search | Date of completion of the search | Examiner |
|---|---|---|
| The Hague | 26 April 2013 | Barriuso Poy, Alex |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 13 15 6160

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2013

| Patent document cited in search report | | Publication date | Patent family member(s) | | Publication date |
|---|---|---|---|---|---|
| US 7301296 | B1 | 27-11-2007 | US<br>US | 7301296 B1<br>2008048603 A1 | 27-11-2007<br>28-02-2008 |
| US 5210704 | A | 11-05-1993 | NONE | | |
| US 5533413 | A | 09-07-1996 | NONE | | |
| US 2009240366 | A1 | 24-09-2009 | CN<br>JP<br>KR<br>TW<br>US<br>WO | 102449623 A<br>2012522307 A<br>20110133497 A<br>201104452 A<br>2009240366 A1<br>2010114641 A1 | 09-05-2012<br>20-09-2012<br>12-12-2011<br>01-02-2011<br>24-09-2009<br>07-10-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. REZAEIZADEHA ; M. FOOLADIA ; M.S. POWELLB ; S.H. MANSOURIA ; N.S. WEERASEKARAB.** A new predictive model of lifter bar wear in mills. *Minerals Engineering,* December 2010, vol. 23 (15), 1174-1181

- **A. KARLSSON ; T. KARLSSON.** Estimating Lifetimes for Stator Windings in Hydropower Generators. *9th International Conference on Probabilistic Methods Applied to Power Systems KTH,* 11 June 2006